# EUROPEAN PATENT SPECIFICATION

(11) **EP 2 742 114 B1**
(45) Date of publication and mention of the grant of the patent: **20.02.2019**
(21) Application number: 12745488.2
(22) Date of filing: 08.08.2012
(51) Int. Cl.: C10G 1/08, B09B 3/00

(54) **APPARATUS AND PROCESS FOR CATALYTIC CONVERSION OF WASTE IN COMBUSTIBLE FLUIDS**
VORRICHTUNG UND VERFAHREN ZUR KATALYTISCHEN UMWANDLUNG VON ABFALL IN BRENNBAREN FLUIDEN
APPAREIL ET PROCÉDÉ DE CONVERSION CATALYTIQUE DE DÉCHETS EN FLUIDES COMBUSTIBLES

(30) Priority: 10.08.2011 IT VR20110169
(43) Date of publication of application: 18.06.2014
(73) Proprietor: Irle S.r.l., 25100 Brescia (IT)
(72) Inventor: CAPRANICA, Pierlorenzo, I-26100 Cremona (IT); MOLINARI, Fulvio, I-25081 Bedizzole (IT)
(74) Representative: Modiano, Micaela Nadia
(86) International application number: PCT/EP2012/065532
(87) International publication number: WO 2013/021011

(56) References cited:
- WO-A2-2009/095888
- US-A- 5 922 277
- US-A1- 2008 148 628
- US-A1- 2009 321 317

## Description

The present invention relates to an apparatus and a process for catalytic conversion of waste into combustible fluids.

Waste disposal today is a very strongly felt problem.

In order to try to limit the transfer of waste to landfills, waste incineration plants (commonly known as incinerators or waste-to-energy plants), have been proposed which allow elimination of waste by means of a high-temperature combustion process (incineration) which yields as final products a gaseous effluent, ash and dust.

With reference to incineration plants of the latest generations, the heat generated during waste combustion is recovered and used to generate steam, which is then used to generate electric power or as a heat transfer medium (for example for remote heating).

While incineration systems have allowed a drastic reduction in the amount of waste to be transferred to landfills, their main drawback is the emission into the atmosphere of highly polluting compounds (for example dioxins).

In order to try to overcome this drawback, treatment plants have been proposed which use technologies of a non-combustive type which provide for a thermochemical decomposition of the waste, yielding as final products a gas or a combustible liquid and a solid with residual heat value.

On the practical level, in these plants the waste is mixed with a transfer fluid and with a reaction catalyst and is heated (typically to temperatures below 400°) in the absence of oxygen so as to avoid any combustion (and therefore emissions of polluting gaseous compounds).

An example of a plant for the treatment of waste with non-combustive technology is described in DE10049377, which teaches a process for the depolymerization of plastic materials and of waste in general containing hydrocarbons.

This plant uses a reactor which is associated with a recirculation evaporator. The reactor, to which the waste to be treated is sent, and the respective connecting ducts are filled with diathermic oil or dense fuel oil mixed with a catalyst.

In order to provide the mixture of dense fuel oil and waste with the energy required for the chemical decomposition reaction, next to the reactor there is a burner which is associated with a chamber for the combustion of the solid residue obtained as a byproduct of the chemical reaction.

However, the solution proposed in DE10049377, despite being conceptually valid, is not free from drawbacks.

In particular, the heating of the mixture by means of the combustion gases of the solid residue, which is a byproduct of the reaction, causes in an extremely short time deposits and scale on the tube nests, drastically reducing the efficiencies of the exchanger and increasing the operating costs of the plant.

In order to try to solve the problem described above, the company Alphakat GmbH proposed, in EP 1538191 B1, a plant in which the heat required for the chemical reaction is supplied to the mixture of dense fuel oil and waste not by means of an exchanger which is external to the reactor/reaction duct but by acting directly inside the reaction duct, by using a mechanical agitator which is adapted to generate a flow in countercurrent with respect to the pumped flow of the mixture of dense fuel oil and waste, said flow in countercurrent generating, by friction, the heating of the mixture.

The company Vuzeta Brevetti Sr1 also moved in this direction and, in patent application no. EP 2113017 A1 and in WO2008102307, describes a plant which is similar to the one proposed in EP 1538191 B1 and in which the heating of the mixture of dense fuel oil and waste is provided again by conversion of kinetic energy into heat energy (friction), in the specific case by means of a pump-turbine which is conceptually similar to the agitator provided in EP 153819 B1.

However, even these solutions have drawbacks which are constituted in particular by the cost of the agitators and by the overall energy balance of the reaction, since said agitators must use electric power, convert it into kinetic energy and then convert it into heat by friction.

Merely by way of example, it is estimated that the power absorbed by the pump-turbine in a medium-sized industrial plant according to what is described in EP 2113017 is equal to approximately 180 kW.

Other patent applications, for example. WO2010/149137 and WO2010/149138 in the name of the University of Applied Sciences of Hamburg, instead describe a method for the conversion of biomass by means of the method of direct liquefaction using a heavy oil as working fluid. US 2008/0148628 discloses an apparatus and a process for catalytic conversion of waste.

Moreover, in all known plants, the need is observed to intervene on the pumping devices, constituted by mechanically-actuated centrifugal pumps, in order to try to limit leaks. These interventions are extremely complex and expensive due to the particular mixture to be pumped, which typically has a percentage of solid of approximately 30% and high temperatures (in the order of 400°C).

The aim of the present invention is to solve the problems and obviate the drawbacks described above, providing a waste treatment apparatus that is capable of eliminating or at least reducing drastically the drawbacks observed in the plants described above.

Within this aim, an object of the invention is to provide a waste treatment apparatus that makes it possible to maintain, in a manner that is highly effective and has a low cost from the point of view of the energy balance, the mixture of transfer fluid and waste at the optimum temperature to ensure the activation of the chemical reactions required for the decomposition of the waste.

Another object of the invention is to provide a waste treatment apparatus that is extremely reliable in its operation and has competitive production and management costs, so as to make its use advantageous also from the economic point of view.

This aim, as well as these and other objects that will become more apparent hereinafter, are achieved by an apparatus and a process for the treatment of waste according to what is provided in the independent claims that follow.

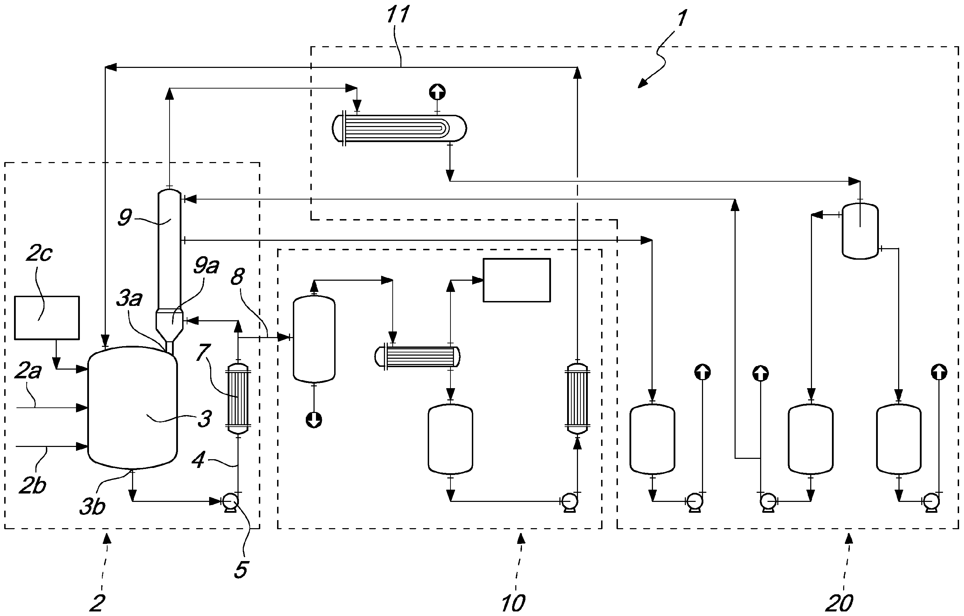

Further characteristics and advantages of the invention will become more apparent from the description of some preferred but not exclusive embodiments of an apparatus and a process for the treatment of waste according to the invention, illustrated by way of non-limiting example in the accompanying drawing.

In the examples of embodiment that follow, individual characteristics, given in relation to specific examples, may actually be interchanged with other different characteristics that exist in other examples of embodiment.

With reference to the figures cited above, the present invention relates to an apparatus, generally designated by the reference numeral 1, for the treatment of waste by catalytic conversion into combustible fluids. The apparatus according to the invention is defined in claim 1.

In particular, the apparatus 1 can be used for the treatment of solid waste with high heat value, such as, but not exclusively, the fluff obtained from the demolition of motor vehicles or WDF (waste derived fuel) obtained from municipal waste.

The apparatus 1 has a reaction assembly 2 which comprises a reactor 3 which is connected, by means of an inlet 3a and a drawing outlet 3b, to a recirculation circuit 4.

In particular, the apparatus 1 uses a technology for the catalytic conversion of waste into combustible fluids that is non-combustive, in the absence of oxygen.

This process, which is of the chemical type, allows rearranging the chemical bonds of the organic macromolecules that are present in the waste to be treated in order to obtain liquid and/or gaseous hydrocarbons.

Specifically, the synthetic or natural polymers that are present in the waste to be treated are partially broken down and recombined, producing, under suitable reaction conditions and in the presence of solid catalysts, hydrocarbons of the family of diesel fuels, petrols and combustible gases.

More precisely, a feeder pump 5 is provided along the recirculation circuit 4.

The reaction assembly 2 is associated with a device for feeding a transfer fluid 2a and a catalyst 2b and with a device 2c for loading waste to be treated.

The feeding devices 2a, 2b and the loading device 2c lead directly into the reactor 3.

In particular, the feeder pump 5 is adapted to draw the contents of the reactor 3 (and therefore the fluid mixture of transfer fluid, catalyst and waste) through the drawing outlet 3b to send it again toward the inlet 3a and then into the reactor 3.

Along the recirculation circuit 4, and more specifically upstream of the inlet 3a, there are in succession the feeder pump 5, a heat exchanger 7, a duct 8 for the recovery of the transfer fluid and at least one column 9 for extracting the water and the hydrocarbons produced by the catalytic conversion reaction.

The recovery duct 8 is adapted to draw continuously part of the fluid reaction mixture that passes through the recirculation duct 4 in order to send it to a recovery and treatment unit, generally designated by the reference numeral 10, which is adapted to separate the solid reaction products, the inert materials and the spent catalyst from the transfer fluid by means of a device for vacuum evaporation and/or distillation of the transfer fluid from the solid component.

The recovery unit 10 is completed by a device for removing the separated solid component from the transfer fluid.

This removal device advantageously operates continuously.

The recovery and treatment unit 10 in turn is connected in output to a duct 11 for sending the recovered transfer fluid again to the reaction assembly 2 and conveniently into the reactor 3.

The heat exchanger 7 comprises a tube nest exchanger which is crossed through by diathermic oil and is connected to a device for heating the diathermic oil.

In particular, the oil heating device uses the excess heat generated by a cogeneration device, which comprises for example a gas-fueled engine, which is arranged downstream of an apparatus for generating electric power by using the combustible gases produced by the catalytic conversion reaction.

According to the present invention, the pump 5 comprises a magnetically-driven centrifugal pump.

In this manner, since there are no mechanical movement means, the seal is ensured, with evident advantages both from the constructive point of view and in terms of plant management.

In particular it has been found that the use, in an apparatus 1, of a magnetically-driven centrifugal pump in combination with a tube nest heat exchanger 7 crossed through by diathermic oil allows a drastic reduction in electric power consumption (requiring approximately 20-22 kW of power as compared to the 180 kW required by a pump-turbine of the type described in the patents in the name of Vuzeta).

In any case, the use of a magnetically-driven centrifugal pump makes it possible to circulate a liquid/solid mixture with a solid fraction up to 30% by weight and a temperature up to 400°C without the need to provide sealing elements and/or devices in order to prevent outward leaks.

Advantageously, the extraction column 9 has a base body 9a which opens in a downward region into the inlet 3a.

Conveniently, the recirculation line 4 engages the base body 9a which accommodates a cyclone to facilitate the separation of the hydrocarbons in the gas/vapor phase and of the water vapor from the transfer fluid and from the solids that are present, which, by means of the inlet 3a, return into the reactor 3.

The hydrocarbons in the gas/vapor phase and the water vapor rise along the extraction column 9, undergoing the appropriate rectification for example by means of a (heavy and light) fuel separator, designated by the reference numeral 20.

Advantageously, the catalyst is selected from the group of non-zeolitic metallic oxides, even of natural origin or recovered.

In order to make the reaction faster and more effective, it has been observed that it is particularly useful to introduce into the reactor at least one agitator, for example a mechanical one.

The present invention also relates to a process which is defined in claim 9.

In practice it has been found that the invention has achieved its intended aim and objects in all the embodiments.

In particular, it has been found that the apparatus according to the invention has allowed the conversion of waste into combustible fluids in an extremely effective manner, achieving the heating of the transfer fluid along the recirculation duct in a practical manner and with a particularly advantageous energy balance.

In practice, the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for treating waste by catalytic conversion in combustible fluids, provided with a reaction assembly (2) which comprises a reactor (3) which is connected, by means of an inlet (3a) and a drawing outlet (3b), to a recirculation circuit (4) along which there is a feeder pump (5), said apparatus (1) comprising a transfer fluid and a catalyst, said reaction assembly (2) being associated with a device (2a) for feeding said transfer fluid directly into said reactor and a device (2b) for feeding said catalyst directly into said reactor, and with a device (2c) for loading waste to be treated directly into said reactor in order to obtain a reaction mixture comprised of said waste, said transfer fluid, and said catalyst, said feeder pump (5) being adapted to draw said reaction mixture from said drawing outlet (3b) in order to send it toward said inlet (3a), where along said recirculation circuit (4) and upstream of said inlet (3a) there are provided, in succession, said feeder pump (5), a heat exchanger (7) comprising a tube bundle exchanger crossed through by diathermic oil and connected to a device for heating said diathermic oil, a duct (8) for recovering the transfer fluid and at least one column (9) for extracting the water and the hydrocarbons produced by the catalytic conversion reaction, said recovery duct (8) being adapted to draw continuously part of said fluid reaction mixture that passes through said recirculation duct (4) to send it to a recovery and treatment unit (10) which is adapted to separate the solid reaction products, the inert materials and the spent catalyst from said transfer fluid, said recovery unit (10) being connected in output to a duct (11) for sending the recovered transfer fluid to said reactor (3) of said reaction assembly (2), said recovery and treatment unit (10) comprising a device for vacuum evaporation of the transfer fluid from the solid component and a device for removing the solid component separated from the transfer fluid.

2. The apparatus (1) for waste treatment according to claim 1, **characterized in that** said heating device comprises a cogeneration system which uses the combustible gases produced by the catalytic conversion reaction.

3. The apparatus (1) according to one or more of the preceding claims, **characterized in that** said pump comprises a magnetically-driven centrifugal pump.

4. The apparatus (1) according to one or more of the preceding claims, **characterized in that** said extraction column (9) has a base body (9a) that leads in a downward region into said inlet (3a).

5. The apparatus (1) according to one or more of the preceding claims, **characterized in that** said recirculation circuit (4) engages said base body (9a).

6. The apparatus (1) according to one or more of the preceding claims, **characterized in that** said base body (9a) accommodates a cyclone.

7. The apparatus (1) according to one or more of the preceding claims, **characterized in that** said catalyst is selected from the group of non-zeolitic metallic oxides, even of natural origin or recovered.

8. The apparatus (1) according to one or more of the preceding claims, **characterized in that** it comprises, inside said reactor, at least one agitator.

9. A process for waste treatment by catalytic conversion in combustible fluids, comprising the steps of:
- loading into a reactor (3) of a reaction assembly (2) directly and separately: the waste to be treated, a transfer fluid and a catalyst in order to obtain a fluid reaction mixture, said reaction assembly (2) comprising said reactor (3) which is connected, through an inlet (3a) and a drawing outlet (3b), to a recirculation circuit (4) along which there is a feeder pump (5);
-- circulating, by means of said feeder pump (5), said fluid reaction mixture through said recirculation circuit (4), said feeder pump (5) being adapted to draw the content of said reactor (3) through said drawing outlet (3b) in order to send it toward said inlet (3a);
-- heating said mixture by means of a heat exchanger (7) with a tube bundle crossed through by diathermic oil and connected to a device for heating said diathermic oil, said heat exchanger (7) being arranged between said drawing outlet (3b) and a duct (8) for recovering the transfer fluid, said recirculation circuit (4) being associated, between said recovery duct (8) and said inlet (3a), with at least one column (9) for extracting the water and the hydrocarbons produced by the catalytic conversion reaction, said recovery duct (8) being adapted to draw continuously part of said transfer fluid that passes through said recirculation duct (4) to send it to a recovery and treatment unit (10) adapted to separate the solid reaction products, the inert materials and the spent catalyst from said transfer fluid, said recovery unit (10) being connected, in output, to a duct (11), and the process further comprising sending the recovered transfer fluid through said duct (11) to said reactor (3) of said reaction assembly (2), said recovery and treatment unit (10) comprising a device for vacuum evaporation of the transfer fluid from the solid component and a device for removing the separated solid component from the transfer fluid.

## Patentansprüche

1. Eine Vorrichtung (1) zur Abfallbehandlung durch katalytische Umwandlung in brennbare Fluide, versehen mit einem Reaktionsaufbau (2), welcher einen Reaktor (3) umfasst, der mittels eines Einlasses (3a) und eines Abzugsauslasses (3b) mit einem Rückführungskreislauf (4), entlang welchem sich eine Zubringerpumpe (5) befindet, verbunden ist, wobei die Vorrichtung (1) ein Übertragungsfluid und einen Katalysator umfasst, der Reaktionsaufbau (2) mit einer Vorrichtung (2a) zum Einbringen des Übertragungsfluids direkt in den Reaktor und mit einer Vorrichtung (2b) zum Einbringen des Katalysators direkt in den Reaktor und mit einer Vorrichtung (2c) zum direkten Beschicken des Reaktors mit zu behandelndem Abfall verbunden ist, um ein Reaktionsgemisch, das aus dem Abfall, dem Übertragungsfluid und dem Katalysator besteht, zu erhalten, wobei die Zubringerpumpe (5) ausgelegt ist, um das Reaktionsgemisch aus dem Abzugsauslass (3b) abzuziehen, um es zum Einlass (3a) zu befördern, wobei entlang dem Rückführungskreislauf (4) und stromaufwärts von dem Einlass (3a) nacheinander Folgendes angeordnet ist: die Zubringerpumpe (5), ein Wärmetauscher (7), der einen von diathermischem Öl durchströmten Rohrbündeltauscher umfasst und mit einer Vorrichtung zum Erwärmen des diathermischen Öls verbunden ist, einen Kanal (8) zum Zurückgewinnen des Übertragungsfluids und mindestens eine Säule (9) zum Extrahieren des Wassers und der Kohlenwasserstoffe, die durch die katalytische Umwandlungsreaktion erzeugt werden, wobei der Rückgewinnungskanal (8) ausgelegt ist, um kontinuierlich einen Teil des Fluidreaktionsgemisches, das den Rückführungskanal (4) durchströmt, abzuziehen, um ihn zu einer Rückgewinnungs- und Behandlungseinheit (10) zu befördern, welche ausgelegt ist, um die festen Reaktionsprodukte, die trägen Materialien und den verbrauchten Katalysator von dem Übertragungsfluid zu trennen, wobei die Rückgewinnungseinheit (10) am Ausgang mit einem Kanal (11) verbunden ist, um das zurückgewonnene Übertragungsfluid zum Reaktor (3) der Reaktionsanordnung (2) zu befördern, wobei die Rückgewinnungs- und Behandlungseinheit (10) eine Vorrichtung für die Vakuumverdampfung des Übertragungsfluids aus der festen Komponente und eine Vorrichtung zum Entfernen der von dem Übertragungsfluid getrennten festen Komponente umfasst.

2. Die Vorrichtung (1) zur Abfallbehandlung gemäß Anspruch 1, **dadurch gekennzeichnet, dass** die Heizvorrichtung eine Kraft-Wärme-Kopplung umfasst, welche die brennbaren Gase, die durch die katalytische Umwandlungsreaktion erzeugt werden, verwendet.

3. Die Vorrichtung (1) gemäß einem oder mehreren der vorhergehenden Ansprüche, **dadurch gekennzeichnet, dass** die Pumpe eine magnetangetriebene Kreiselpumpe umfasst.

4. Die Vorrichtung (1) gemäß einem oder mehreren der vorhergehenden Ansprüche, **dadurch gekennzeichnet, dass** die Extraktionssäule (9) einen Basiskörper (9a) aufweist, der in einem nach unten gerichteten Bereich in den Einlass (3a) führt.

5. Die Vorrichtung (1) gemäß einem oder mehreren der vorhergehenden Ansprüche, **dadurch gekennzeichnet, dass** der Rückführungskreislauf (4) in den Basiskörper (9a) eingreift.

6. Die Vorrichtung (1) gemäß einem oder mehreren der vorhergehenden Ansprüche, **dadurch gekennzeichnet, dass** der Basiskörper (9a) einen Fliehkraftabscheider enthält.

7. Die Vorrichtung (1) gemäß einem oder mehreren der vorhergehenden Ansprüche, **dadurch gekennzeichnet, dass** der Katalysator aus der Gruppe nichtzeolithischer Metalloxide, sogar natürlichen Ursprungs oder zurückgewonnen, ausgewählt ist.

8. Die Vorrichtung (1) gemäß einem oder mehreren der vorhergehenden Ansprüche, **dadurch gekennzeichnet, dass** sie in dem Reaktor mindestens einen Mischer umfasst.

9. Ein Verfahren zur Abfallbehandlung durch katalytische Umwandlung in brennbare Fluide, das die folgenden Schritte umfasst:
- direktes und separates Beschicken eines Reaktors (3) eines Reaktionsaufbaus (2) mit dem zu behandelnden Abfall, einem Übertragungsfluid und einem Katalysator, um ein Fluidreaktionsgemisch zu erhalten, wobei der Reaktionsaufbau (2) den Reaktor (3) umfasst, welcher durch einen Einlass (3a) und einen Abzugsauslass (3b) mit einem Rückführungskreislauf (4), entlang welchem sich eine Zubringerpumpe (5) befindet, verbunden ist;
- Zirkulieren, mittels der Zubringerpumpe (5), des Fluidreaktionsgemischs durch den Rückführungskreislauf (4), wobei die Zubringerpumpe (5) ausgelegt ist, um den Inhalt des Reaktors (3) durch den Abzugsauslass (3b) abzuziehen, um ihn zum Einlass (3a) zu befördern;
- Erwärmen des Gemischs mittels eines Wärmetauschers (7) mit einem von diathermischem Öl durchströmten Rohrbündel, das mit einer Vorrichtung zum Erwärmen des diathermischen Öls verbunden ist, wobei der Wärmetauscher (7) zwischen dem Abzugsauslass (3b) und einem Kanal (8) zum Zurückgewinnen des Übertragungsfluids angeordnet ist, der Rückführungskreislauf (4) zwischen dem Rückgewinnungskanal (8) und dem Einlass (3a) mit mindestens einer Säule (9) zum Extrahieren des Wassers und der Kohlenwasserstoffe, die durch die katalytische Umwandlungsreaktion erzeugt werden, verbunden ist, wobei der Rückgewinnungskanal (8) ausgelegt ist, um kontinuierlich einen Teil des Übertragungsfluids, das durch den Rückführungskanal (4) strömt, abzuziehen, um es zu einer Rückgewinnungs- und Behandlungseinheit (10) zu befördern, die ausgelegt ist, um die festen Reaktionsprodukte, die trägen Materialien und den verbrauchten Katalysator von dem Übertragungsfluid zu trennen, wobei die Rückgewinnungseinheit (10) am Ausgang mit einem Kanal (11) verbunden ist, und wobei das Verfahren ferner das Befördern des zurückgewonnenen Übertragungsfluids durch den Kanal (11) zum Reaktor (3) des Reaktionsaufbaus (2) umfasst, wobei die Rückgewinnungs- und Behandlungseinheit (10) eine Vorrichtung für die Vakuumverdampfung des Übertragungsfluids aus der festen Komponente und eine Vorrichtung zum Entfernen der abgetrennten festen Komponente von dem Übertragungsfluid umfasst.

## Revendications

1. Appareil (1) destiné à traiter des déchets par conversion catalytique en fluides combustibles, pourvu d'un ensemble de réaction (2) qui comporte un réacteur (3) qui est relié, au moyen d'une entrée (3a) et d'une sortie d'aspiration (3b), à un circuit de recirculation (4) le long duquel il y a une pompe d'alimentation (5), ledit appareil (1) comportant un fluide de transfert et un catalyseur, ledit ensemble de réaction (2) étant associé à un dispositif (2a) pour transporter ledit fluide de transfert directement dans ledit réacteur et un dispositif (2b) pour transporter ledit catalyseur directement dans ledit réacteur, et un dispositif (2c) pour charger des déchets à traiter directement dans ledit réacteur afin d'obtenir un mélange réactionnel constitué desdits déchets, dudit fluide de transfert et dudit catalyseur, ladite pompe d'alimentation (5) étant adaptée pour aspirer ledit mélange réactionnel à partir de ladite sortie d'aspiration (3b) afin de l'envoyer vers ladite entrée (3a), où sont successivement agencés, le long dudit circuit de recirculation (4) et en amont de ladite entrée (3a), ladite pompe d'alimentation (5), un échangeur de chaleur (7) comportant un échangeur à faisceau de tubes traversé par de l'huile diathermique et relié à un dispositif pour chauffer ladite huile diathermique, un conduit (8) pour récupérer le fluide de transfert et au moins une colonne (9) pour extraire l'eau et les hydrocarbures produits par la réaction de conversion catalytique, ledit conduit de récupération (8) étant adapté pour aspirer en continu une partie dudit mélange réactionnel fluide qui passe à travers ledit conduit de recirculation (4) pour l'envoyer vers une unité de récupération et de traitement (10) qui est adaptée pour séparer les produits réactionnels solides, les matières inertes et le catalyseur consommé provenant dudit fluide de transfert, ladite unité de récupération (10) étant reliée en sortie à un conduit (11) pour envoyer le fluide de transfert récupéré vers ledit réacteur (3) dudit ensemble de réaction (2), ladite unité de récupération et de traitement (10) comportant un dispositif pour l'évaporation sous vide du fluide de transfert à partir du composant solide et un dispositif pour enlever le composant solide séparé du fluide de transfert.

2. Appareil (1) de traitement de déchets selon la revendication 1, **caractérisé en ce que** ledit dispositif de chauffage comporte un système de cogénération qui utilise les gaz combustibles produits par la réaction de conversion catalytique.

3. Appareil (1) selon une ou plusieurs des revendications précédentes, **caractérisé en ce que** ladite pompe comporte une pompe centrifuge entraînée magnétiquement.

4. Appareil (1) selon une ou plusieurs des revendications précédentes, **caractérisé en ce que** ladite colonne d'extraction (9) a un corps de base (9a) qui mène à une zone descendante dans ladite entrée (3a).

5. Appareil (1) selon une ou plusieurs des revendications précédentes, **caractérisé en ce que** ledit circuit de recirculation (4) s'engage dans ledit corps de base (9a).

6. Appareil (1) selon une ou plusieurs des revendications précédentes, **caractérisé en ce que** ledit corps de base (9a) reçoit un cyclone.

7. Appareil (1) selon une ou plusieurs des revendications précédentes, **caractérisé en ce que** ledit catalyseur est choisi parmi le groupe constitué d'oxydes métalliques non zéolitiques, voire d'origine naturelle ou récupérés.

8. Appareil (1) selon une ou plusieurs des revendications précédentes, **caractérisé en ce qu'**il comporte, à l'intérieur dudit réacteur, au moins un agitateur.

9. Procédé de traitement de déchets par conversion catalytique en fluides combustibles, comportant les étapes consistant à :
- charger dans un réacteur (3) d'un ensemble de réaction (2) directement et séparément : les déchets à traiter, un fluide de transfert et un catalyseur afin d'obtenir un mélange réactionnel fluide, ledit ensemble de réaction (2) comportant ledit réacteur (3) qui est relié, via une entrée (3a) et une sortie d'aspiration (3b), à un circuit de recirculation (4) le long duquel il y a une pompe d'alimentation (5),
- faire circuler, au moyen de ladite pompe d'alimentation (5), ledit mélange réactionnel fluide à travers ledit circuit de recirculation (4), ladite pompe d'alimentation (5) étant adaptée pour aspirer le contenu dudit réacteur (3) à travers ladite sortie d'aspiration (3b) afin de l'envoyer vers ladite entrée (3a),
- chauffer ledit mélange au moyen d'un échangeur de chaleur (7) avec un faisceau de tubes traversé par de l'huile diathermique et relié à un dispositif pour chauffer ladite huile diathermique, ledit échangeur de chaleur (7) étant agencé entre ladite sortie d'aspiration (3b) et un conduit (8) pour récupérer le fluide de transfert, ledit circuit de recirculation (4) étant associé, entre ledit conduit de récupération (8) et ladite entrée (3a), à au moins une colonne (9) pour extraire l'eau et les hydrocarbures produits par la réaction de conversion catalytique, ledit conduit de récupération (8) étant adapté pour aspirer en continu une partie dudit fluide de transfert qui passe à travers ledit conduit de recirculation (4) pour l'envoyer vers une unité de récupération et de traitement (10) adaptée pour séparer les produits de réaction solides, les matières inertes et le catalyseur consommé provenant dudit fluide de transfert, ladite unité de récupération (10) étant reliée, en sortie, à un conduit (11), et le procédé comportant en outre l'envoi du fluide de transfert récupéré par ledit conduit (11) vers ledit réacteur (3) dudit ensemble de réaction (2), ladite unité de récupération et de traitement (10) comportant un dispositif pour l'évaporation sous vide du fluide de transfert provenant du composant solide et un dispositif pour enlever le composant solide séparé du fluide de transfert.
